Europäisches Patentamt

European Patent Office

Office européen des brevets

(11) Publication number: **0 200 414 B1**

# EUROPEAN PATENT SPECIFICATION

(45) Date of publication of patent specification: **06.11.91**    (51) Int. Cl.⁵: **G02B 6/38, G02B 6/40, G02B 26/02, G02B 6/44, G02B 26/04**

(21) Application number: **86302785.0**

(22) Date of filing: **15.04.86**

(54) Optical fibre terminating device and a method of terminating optical fibres.

(30) Priority: **23.04.85 GB 8510263**

(43) Date of publication of application:
**05.11.86 Bulletin 86/45**

(45) Publication of the grant of the patent:
**06.11.91 Bulletin 91/45**

(84) Designated Contracting States:
**AT BE CH DE FR GB IT LI LU NL SE**

(56) References cited:
**US-A- 3 586 563**
**US-A- 3 920 432**
**US-A- 4 208 094**

**PATENTS ABSTRACTS OF JAPAN, vol. 8, no. 55 (P-260)[1492], 13th March 1984; & JP - A - 58 205 106 (MATSUSHITA DENKI SANGYO K.K.) 30-11-1983**

**APPLIED OPTICS, vol. 17, no. 22, 15th November 1978, pages 3675-3678; H. YAMAMOTO et al.: "Moving optical-fiber switch experiment"**

(73) Proprietor: **BRITISH TELECOMMUNICATIONS public limited company**
**81 Newgate Street**
**London EC1A 7AJ(GB)**

(72) Inventor: **Nicholls, Simon Thomas**
**Parkside The Street Earl Soham**
**Woodbridge Suffolk IP13 7SA(GB)**

(74) Representative: **Pratt, David Martin et al**
**Intellectual Property Unit British Telecom**
**151 Gower Street**
**London WC1E 6BA(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an optical fibre terminating device and a method of terminating optical fibres in which the ends of a plurality of fibres are permanently secured in a receptacle.

The advantages of optical fibres, over copper conductors, for signal transmission are well known and include, for example, broad bandwidth and immunity to inductive pick up. However a particular problem with optical fibres is that of termination to facilitate splicing and switching etc. Unfortunately developments which have improved transmission qualities have resulted in fibres having a small outer diameter with an even smaller transmission core. Terminating monomode fibres having a small outer diameter (in the range of two hundred micro-meters down to ten micro-meters) is therefore particularly difficult.

Optical fibres are preferably terminated in groups or bundles rather than individually. This not only facilitates mechanical handling of the fibres but also allows additional functions to be provided, for example signal switching and multiplexing. A method of terminating small diameter fibres is shown in British Patent No 1524874 of Chinnock. Figure 1 of this patent shows a receptacle in the form of a holder 10 in two Sections 11 and 12. Each section has a series of parallel grooves having an internal angle of ninety degrees. A fibre is placed in each of the grooves of Section 11 and then covered by a co-operating groove in Section 12. The fibres are then permanently secured by an epoxy adhesive.

In the above known terminating device the relative position of the fibres can be maintained within a very accurate tolerance range. However a disadvantage of the device is that it only provides a linear band of fibres and not a multi layer array, the latter being desirable in many applications. A multi layer array could be fabricated by securing a plurality of holders together or alternatively, intermediate holder sections may be provided with grooves on both sides. However both of these techniques result in an array in which the distance between fibres is relatively very large.

Closely packed arrays may be produced for large diameter multimode fibres by known techniques. An example of grouping large diameter fibres is shown by Tomlinson in United States Patent 4208094. However it must be realised that handling large diameter fibres is relatively easy and represents a totally different branch of the optical fibre art. It is therefore possible to glue seven large diameter fibres together to produce an array consisting solely of fibres and glue. This approach would not be delicate. Before being glued, the seven fibres of Tomlinson are supported in a "V" shaped groove with three dummy fibres. The groove is formed in a support block and techniques are known providing a groove which is accurate enough for large diameter fibres. However such a groove could not be machined to the required tolerances for small diameter fibres.

JP58205106 discloses a similar technique to that taught by Tomlinson for providing a circular array of fibres by insertion of a multiplicity of fibres in a "V" groove, supporting the usable fibres using dummy fibres. In the aforementioned Japanese patent the technique is used for fibres having diameters of several hundreds of microns. Accordingly, any slight inaccuracy in machining the base of the "V" groove for a mololithic block does not substantially affect the alignment of the circular array. However, if the method and terminating device proposed in JP 58205106 is used with smaller diameter fibres (ie fibres having a diameter of less than 200 microns) a minute inaccuracy in the base of the "V" groove may result in a gross inaccuracy in the alignment of the fibres.

It is therefore an object of the present invention to provide an improved terminating device of the kind disclosed in JP58205106 or US4208094 and a method of manufacturing and using such a device which alleviates the alignment problems which may be caused by inaccuracies in the manufacture of the device.

According to a first aspect of the invention there is provided an optical fibre terminating device in which, in use, the ends of a plurality of small diameter fibres are permanently secured in a receptacle having a "V" shaped groove with an internal angle of sixty degrees, the "V" shaped groove being arranged to receive a close packed array of small diameter juxtaposed fibres which, in use, are permanently fixed within the groove; characterised in that the receptacle comprises first and second parts having respective first and second planar surface portions, and respective first and second further planar surface portions which make with their associated first and second planar surface portions two respective external angles therewith having a total of four hundred and twenty degrees, the parts being joined together such that they are in contact with each other over said respective further planar surface portions whereby said first and second planar surface portions form the "V" groove with an internal angle of sixty degrees, and a line of intersection between a said planar surface portion and its associated further planar surface portion forms the base line of the "V" groove.

An advantage of the first aspect is that a multi layer array is provided wherein the fibres are secured within the device while being accurately displaced relative to one another.

Preferably each of said first and second parts has its planar surface portion and its further planar surface portion intersecting along said base line, and the external angle between its planar surface portions is two hundred and ten degrees. An advantage of this preferred embodiment is that the two parts may be made symmetrical and thus may be cut from a common length of material.

Preferably the device includes a wedge for contacting the row of fibres furthermost from the common line. This embodiment has the advantage of enclosing the fibres totally within the material of the receptacle. Preferably the receptacle is fabricated in silica facilitating bonding between the receptacle and the fibres.

In a preferred embodiment the fibres form an array having a triangular cross section, the axis of a central fibre lies on the inter-section of the three lines bisecting the angles of the triangular array, and the receptacle is arranged to rotate about the axis of the central fibre.

An advantage of this preferred embodiment is that it is possible to switch from one fibre of the array to another similar fibre by rotating the device. It should be noted that six fibres surround the inner most or central fibre wherein an array fabricated according to the Chinnock teaching would only provide four fibres surrounding an inner most fibre.

In a preferred embodiment the receptacle is substantially cylindrical and the central fibre is positioned along the central axis of the cylindrical receptacle.

An advantage of this preferred arrangement is that the whole device may be accommodated in a mounting similar, or identical, to a mounting used for single large fibres. Furthermore rotation of the array about the central fibre merely involves rotation about the central axis of the cylindrical receptacle.

A small diameter fibre may be defined as having a diameter in the range of ten micrometers to two hundred micrometers, however, preferably the "V" shaped groove is arranged to receive fibres having an outer diameter in the range of forty micrometers to one hundred and seventy micrometers. The device is therefore advantageously arranged to accommodate monomode fibres.

According to a second aspect of the present invention there is provided a method of forming an optical fibre terminating device according to Claim 1, characterised by the steps of providing a receptacle comprising first and second parts having respective first and second planar surface portions and respective first and second further planar surface portions which make two respective external angles therewith having a total of four hundred and twenty degrees, at least one of said external angles being at a line of intersection between its associated planar surface portions bringing the further planar surface portion of said first part into contact with the further planar surface portion of said second part, and joining said first and second parts together such that said first and second planar surface portions form a precise sixty degree "V" groove in the receptacle having a base line formed by said line of intersection bending small diameter fibres and introducing them to the receptacle with a force acting generally towards the base line of the "V" groove thereby forming a close packed array of juxtaposed fibres received in said groove, and permanently securing said received array of juxtaposed fibres in the receptacle.

Preferably the method is further characterised by bending a first fibre and applying force in the direction of the base line of the groove so that the fibre lies along the groove, bending two further fibres and applying force in the direction of the groove so that the further fibres are juxtaposed with the first, and introducing further fibres in the same manner to form an optical fibre array having a triangular cross-section.

An alternative preferred method is further characterised by grouping the fibres in a "V" shaped guide to form a triangular array, inclining the guide at an angle to the receptacle so as to bend the fibres and forcing the fibres in juxaposition into the receptacle.

The invention will now be described, by way of example, with reference to the accompanying drawings, in which:

Figure 1 is a sectional side view of an optical fibre terminating device according to an embodiment of this invention;

Figure 2 is a view showing on method of forming such device; and

Figure 3 is a view showing an alternative method of formation.

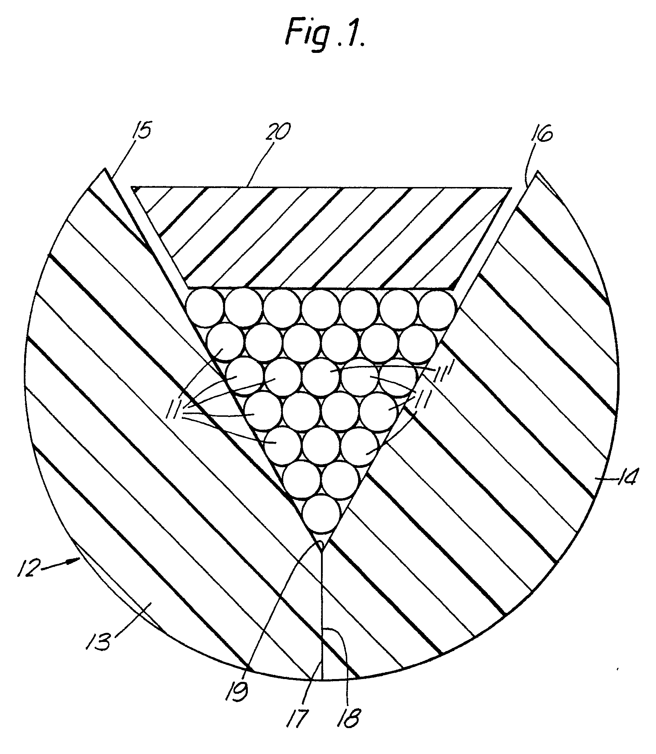

Referring to Figure 1, this shows a multi-layer optical fibre termination, viewed in section taken normal to the axes of optical fibres 11. There are seven layers of fibres 11 in a triangular array.

The fibres are held in a receptacle 12, the body of which is formed in two parts, 13 and 14, of fused silica. The parts 13 and 14 are alike; each has a respective plane surface 15, 16 (constituting first and second planar surface portions of the invention) inclined to a respective plane surface 17, 18 (constituting first and second further planar surface portions of the invention), and the parts are joined by fusing surfaces 17, 18 together, so that the four surfaces 15, 16, 17, 18 meet along an edge indicated by 19 in the Figure. This line is the base line of the "V" groove formed by surfaces 15, 16 which are inclined at sixty degrees to one another. By forming the body in two parts the two surfaces 15, 16 can be made to meet very precisely at edge 19 so that the base of the "V" groove is a sharp sixty degree angle. This ensures that the lowermost fibre fits into the bottom of the groove as shown and all the fibres of the array can be juxtaposed. A rounded base to the groove can lead to the bottom fibre being incorrectly positioned, and there will then be a gap between the two fibres in the second row, and gaps between other fibres in the array.

The fibres are held together by adhesive and a silica wedge 20 is disposed on the top row of fibres 11.

The receptacle 12 may be held in a standard connector normally used for one fibre, or for a single row of fibres. One fibre, preferably the central fibre 11', is aligned in the connector in a standard manner. Depending on the application, for example for circular switching, the connector may be rotated about the axis of this fibre.

The fibres 11 are monomode fibres having an outer diameter of one hundred and twenty-five micrometers when stripped of their protective coating. Larger or smaller diameter fibres may be used if desired, for example, fibres having a diameter of fifty micrometers could be located in the receptacle 12. The fibres used would normally have diameters of less than two hundred micrometers and typically be within the range of forty micrometers to one hundred and seventy micrometers, or ten micrometers to one hundred and seventy micrometers.

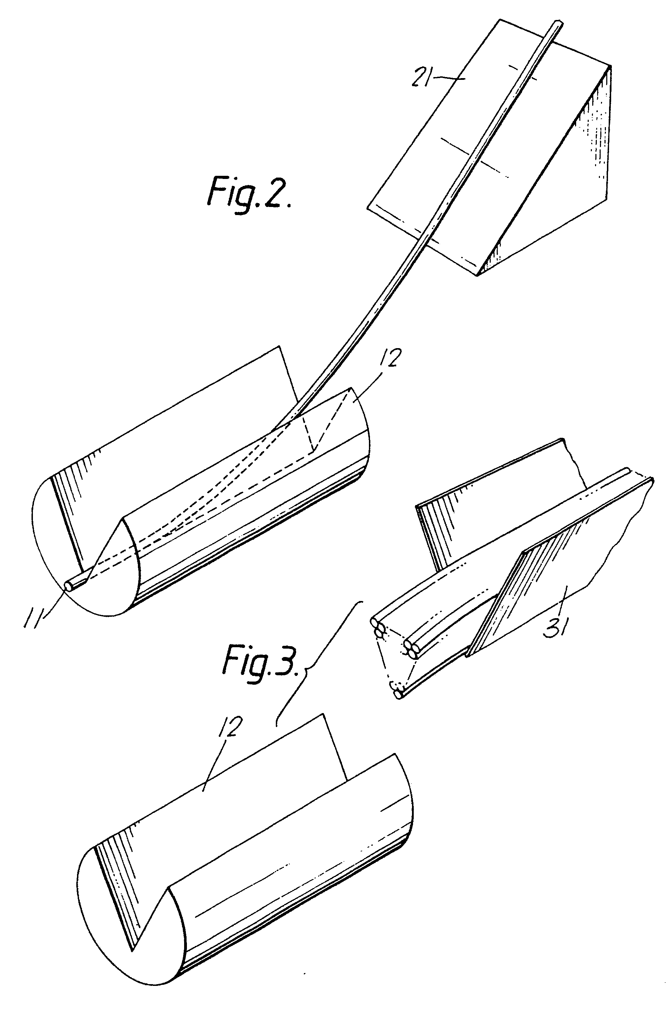

One method of forming the device of Figure 1 is illustrated in Figure 2. The receptacle 12 is clamped with the "V" groove lying generally horizontal. An inclined surface 21 is supported at an angle of about twenty degrees to the horizontal a short distance from the rear end of the receptacle. The fibres for the array are chemically stripped of their protective coating to expose the fibre cladding. A first fibre is introduced to the "V" groove so that its front end portion lies in the groove and an intermediate part rests on surface 21. The fibre is thus bent and there will be a force on the front portion acting towards the base line of the groove. The fibre is then pushed forwards so that its front end extends past the front edge of the "V" groove, and this end is clamped so that the downward force on the fibres is increased and the fibre is held tight against the base of the groove. The hold on this fibre is maintained while two further fibres are brought down on top of it, by advancing them along the surface 21, until they also extend beyond the front end of the "V" groove. These fibres are then clamped so they press on the first fibre, which is released. The procedure is repeated, with the next row of three fibres being introduced to the "V" groove, clamped and the two fibres below released. Further rows of four, five, six and seven fibres are added. The top row of seven fibres is held clamped until wedge 20 has been fitted into the top of the groove and clamped.

A high viscosity expoxy adhesive, such as rapid Araldite (Trade Hark), is applied at the rear of the groove. A very low viscosity expoxy resin such as Perma Bond E27 (Trade Mark) is then introduced to the front of the "V" groove. A hot air gun is used to force the resin to flow along the groove between the fibres, and also cures the resin. Flow of resin past the rear end of the groove is prevented by the high viscosity adhesive.

The device thus formed can now be introduced to a standard connector, such as Amphenol SMA, ITT Canon or Weco connectors, and the central fibre 11' of the array aligned by standard procedures. After alignment the termination is cemented in the connector using a standard expoxy adhesive. The front surfaces of the fibres are machined so that they are normal to the axis of fibre 11, and then lapped and polished to give a transmission surface.

The device has rows of fibres lying with their axes accurately parallel to one another with each fibre contacting adjacent fibres, walls of the "V" groove or the wedge 20. The central axes of adjacent fibres are therefore equally spaced so that the device can be used satisfactorily for a variety of applications. These include linear and circular switches, wavelength multiplexors and demultiplexors using gratings (which may be switchable), integrated optical matrix switches, DCG holographic reflection filters, Fabry-Perot multipass cavity devices, and multifibre connectors.

An alternative to the above method is now described with reference to Figure 3. In this embodiment, a guide 31 in the form of a large "V" is provided. All of the fibres to be introduced into the "V" groove of the receptacle 12 (twenty eight fibres) are placed in guide 31, where the outer coating of the fibres is chemically stripped. Guide 31 is then inclined and clamped so that it is a short distance from receptacle 12. The fibres are forced forwards so they enter the "V" groove of the receptacle. Forward movement continues until the ends of the fibres pass beyond the edge of the "V" groove. The fibres, properly juxtaposed, are clamped at the front and rear of the receptacle. Adhesive is applied as described for the first method and the device is aligned in a connector. It will be observed that in the second method, no wedge (20) is used.

The above methods may be used for forming devices having larger arrays than the one illustrated, for example fifty five fibre arrays with fibres having a diameter of fifty micrometers or one hundred and twenty five micrometers.

**Claims**

1. An optical fibre terminating device in which, in use, the ends of a plurality of small diameter fibres (11) are permanently secured in a receptacle (12) having a "V" shaped groove (15-19-16) with an internal angle of sixty degrees, the "V" shaped groove being arranged to receive a close packed array of small diameter juxtaposed fibres (11) which, in use, are permanently fixed within the groove; characterised in that the receptacle comprises first and second parts (13, 14) having respective first and second planar surface portions (15, 16), and respective first and second further planar surface portions (17, 18) which make with their associated first and second planar surface portions (15, 16) two respective external angles having a total of four hundred and twenty degrees, the parts (13, 14) being joined together such that they are in contact with each other over said respective further planar surface portions (17, 18), whereby said first and second planar surface portions (15, 16) form the "V" groove with an internal angle of sixty degrees, and a line of intersection (19) between a said planar surface portion (15, 16) and its associated further planar surface portion (17, 18) forms the base line (19) of the "V" groove.

2. An optical fibre terminating device according to Claim 1 characterised in that each of said first and second parts (13, 14) has its planar surface portion (15, 16) and its further planar surface portion (17, 18) intersecting along said base line (19), and the external angle between its planar surface portions (15 and 17, 16 and 18) is two hundred and ten degrees.

3. An optical fibre terminating device according to Claim 1 characterised in that it further includes a wedge (20) for contacting the row of fibres furthermost from the base line (19).

4. An optical fibre terminating device according to Claim 1 or Claim 2 characterised in that the receptacle (12) is fabricated from silica.

5. An optical fibre terminating device according to any of Claims 1 to 3 characterised in that the fibres (11) form an array having a triangular cross section, the axis of a central fibre (11') lies on the cross section of the three lines bisecting the angles of the triangular array, and the receptacle is arranged to rotate about the axis of the central fibre.

6. An optical fibre terminating device according to Claim 4 characterised in that the receptacle (12) is substantially cylindrical and the central fibre (11') is positioned along the central axis of the cylindrical receptacle.

7. An optical fibre terminating device according to Claim 1, characterised in that the groove (15, 19, 16) is arranged to receive fibres having an external diameter within the range of forty micrometers to one hundred and seventy micrometers.

8. A method of forming an optical fibre terminating device according to Claim 1, characterised by the steps of providing a receptacle (12) comprising first and second parts (13, 14) having respective first and second planar surface portions (15, 16) and respective first and second further planar surface portions (17, 18) which make two respective external angles therewith having a total of four hundred and twenty degrees, at least one of said external angles being at a line of intersection (19) between its associated planar surface portions (15 and 17, 16 and 18); bringing the further planar surface portion (17) of said first part (13) into contact with the further planar surface portion (18) of said second part (14), and joining said first and second parts (13, 14) together such that said first and second planar surface portions (15, 16) form a precise sixty degree "V" groove in the receptacle having a base line (19) formed by said line of intersection (19); bending small diameter fibres and introducing them to the receptacle with a force acting generally towards the base line (19) of the "V" groove thereby forming a close packed array of juxtaposed fibres received in said groove, and permanently securing said received array of juxtaposed fibres in the receptacle (12).

9. A method of forming a terminating device according to Claim 8 characterised by bending a first fibre (11) and applying force in the direction of the base line (19) of the groove so that the fibre lies along the groove, bending two further fibres and applying force in the direction of the groove so that the further fibres are juxtaposed with the first, and introducing further fibres in the same manner to form an optical fibre array having a triangular cross-section.

10. A method of forming a terminating device according to Claim 8 characterised by grouping the fibres in a "V" shaped guide (31) to form a triangular array, inclining the guide at an angle to the receptacle so as to bend the fibres and forcing the fibres in juxtaposition into the receptacle.

11. A method of forming a terminating device according to any of Claims 8 to 10 characterised by positioning a wedge (20) across the row of fibres furthermost from the base line (19).

**Revendications**

1. Un dispositif de terminaison de fibre optique dans lequel, en utilisation, les extrémités de plusieurs fibres (11) de petit diamètre sont fixées de façon permanente dans un réceptacle (12) comportant une rainure en forme de "V" (15-19-16) présentant un angle interne de soixante degrés, la rainure en forme de "V" étant agencée pour recevoir un réseau étroitement serré de fibres juxtaposées (11) de petit diamètre qui, en utilisation, sont fixées en permanence à l'intérieur de la rainure; caractérisé en ce que le réceptacle comprend un premier et un deuxième éléments (13, 14) comportant une première et une deuxième parties respectives (15, 16) de surfaces planes et une première et une deuxième autres parties respectives de surfaces planes (17, 18) qui forment avec leurs première et deuxième parties associées (15, 16) de surfaces planes deux angles externes respectifs dont le total est de quatre cent vingts degrés, les éléments (13, 14) étant assemblés entre eux d'une manière telle qu'ils sont en contact entre eux au moyen desdites autres parties (17, 18) de surfaces planes, grâce à quoi lesdites première et deuxième parties (15, 16) de surfaces planes forment la rainure en "V" présentant un angle de soixante degrés, et une ligne d'intersection (19) entre une dite partie (15, 16) de surfaces planes et son autre partie (17,18) de surface plane associée forment la ligne de base (19) de la rainure en "V".

2. Un dispositif de terminaison de fibres optiques selon la revendication 1, caractérisé en ce que chacun desdits premier et deuxième éléments (13, 14) présente sa partie de surface plane (15, 16) et son autre partie (17, 18) de surface plane en intersection le long de ladite ligne de base (19), et l'angle externe entre ces parties (15 et 17, 16 et 18) de surfaces planes est de deux cent dix degrés.

3. Un dispositif de terminaison de fibres optiques selon la revendication 1, caractérisé en ce qu'il comprend en outre un coin (20) pour venir en contact avec la rangée de fibres la plus éloignée de la ligne de base (19).

4. Un dispositif de terminaison de fibres optiques selon la revendication 1, ou la revendication 2, caractérisé en ce que le réceptacle (12) est fabriqué à partir de silice.

5. Un dispositif de terminaison de fibres optiques selon l'une quelconque des revendications 1 à 3, caractérisé en ce que les fibres (11) forment un réseau de section transversale triangulaire, l'axe d'une fibre centrale (11') est situé sur la section transversale des trois lignes bissectrices des angles du réseau triangulaire, et le réceptacle est agencé pour tourner au tour de l'axe de la fibre centrale.

6. Un dispositif de terminaison de fibres optiques selon la revendication 4, caractérisé en ce que le réceptacle (12) est sensiblement cylindrique et la fibre centrale (11') est positionnée le long de l'axe central du réceptacle cylindrique.

7. Un dispositif de terminaison de fibres optiques selon la revendication 1, caractérisé en ce que la rainure (15, 19, 16) est agencée pour recevoir des fibres dont le diamètre extérieur est dans la plage de quarante micromètres à cent soixante dix micromètres.

8. Un procédé de formation d'un dispositif de terminaison de fibres optiques selon la revendication 1, caractérisé par les étapes consistant à réaliser un réceptacle (12) comprenant un premier et un deuxième éléments (13, 14) comportant une première et une deuxième parties respectives (15, 16) de surfaces planes et une première et une deuxième autres parties respectives (17, 18) de surfaces planes qui forment deux angles externes respectifs avec elles d'une valeur totale de quatre cent vingts degrés, au moins l'un desdits angles externes se trouvant à une ligne d'intersection (19) entre ses parties (15 et 17, 16 et 18) de surfaces planes associées; amener l'autre partie (17) de surface plane dudit premier élément (13) en contact avec l'autre partie (18) de surface plane dudit deuxième élément (14), et assembler ledit premier et ledit deuxième éléments (13, 14) entre eux de telle manière que lesdites première et deuxième parties de surfaces planes (15, 16) forment une rainure en "V" de soixante degrés précisément dans le réceptacle dans lequel une ligne de base (19) est formée par ladite ligne d'intersection (19); fléchir des fibres de petit diamètre et les introduire dans le réceptacle selon une force agissant généralement vers la ligne de base (19) de la rainure en "V" en formant ainsi un réseau étroitement serré de fibres juxtaposées et reçues dans ladite rainure, et fixer de façon permanente ledit réseau de fibres juxtaposées dans le réceptacle (12).

9. Un procédé de formation d'un dispositif de terminaison selon la revendication 8, caractérisé par une flexion d'une première fibre (11) et une application d'une force dans le sens de la ligne de base (19) de la rainure de façon que la fibre repose le long de la rainure, une flexion de deux autres fibres et l'application d'une force dans le sens de la rainure de façon que les autres fibres soient juxtaposées avec la première, et l'introduction d'autres fibres de la même manière pour former un réseau de fibres optiques à section transversale triangulaire.

10. Un procédé de formation d'un dispositif de terminaison selon la revendication 8, caractérisé par un groupement des fibres dans un guide (31) en forme de "V" pour former un réseau triangulaire, l'inclinaison du guide selon un angle vers le réceptacle de façon à fléchir les fibres et à forcer les fibres en juxtaposition dans le réceptacle.

11. Un procédé de formation d'un dispositif de terminaison selon l'une quelconque des revendications 8 à 10, caractérisé par un positionnement d'un coin (20) en travers de la rangée de fibres la plus éloignée de la ligne de base (19).

**Patentansprüche**

1. Begrenzungsvorrichtung für optische Fasern, bei der bei Verwendung die Enden einer Vielzahl von Fasern (11) kleinen Durchmessers permanent in einer Aufnahme (12) gesichert sind, die eine "V"-förmige Vertiefung (15-19-16) mit einem inneren Winkel von 60° aufweist, wobei die "V"-förmige Vertiefung angeordnet ist zum Aufnehmen einer dicht gepackten Anordnung nebeneinander angeordneten Fasern (11) kleinen Durchmessers, die bei Verwendung permanent in der Vertiefung fixiert sind; dadurch gekennzeichnet, daß die Aufnahme einen ersten und einen zweiten Teil (13, 14) aufweist, die jeweils einen ersten und einen zweiten ebenen Oberflächenabschnitt (15, 16) haben und jeweils einen ersten und einen zweiten weiteren ebenen Oberflächenabschnitt (17, 18), die mit ihren zugehörigen ersten und zweiten ebenen Oberflächenabschnitten (15, 16) zwei jeweils äußere Winkel erzeugen, die insgesamt vierhundertzwanzig Grad aufweisen, wobei die Teile (13, 14) derart miteinander verbunden sind, daß sie miteinander über die jeweiligen weiteren ebenen Oberflächenabschnitte (17, 18) in Kontakt sind, wodurch der erste und der zweite ebene Oberflächenabschnitt (15, 16) die "V"-Vertiefung mit einem inneren Winkel von 60° bilden und eine Schnittlinie (19) zwischen dem ebenen Oberflächenabschnitt (15, 16) und seinem zugeordneten weiteren ebenen Oberflächenabschnitt (17, 18) die Grundlinie (19) der "V"-Vertiefung bildet.

2. Begrenzungsvorrichtung für optische Fasern nach Anspruch 1, dadurch gekennzeichnet, daß sich der ebene Oberflächenabschnitt (15, 16) und der weitere ebene Oberflächenabschnitt (17, 18) jedes des ersten und des zweiten Teils (13, 14) entlang der Grundlinie (19) schneidet, und daß der äußere Winkel zwischen ihren ebenen Oberflächenabschnitten (15 und 17, 16 und 18) zweihundertzehn Grad beträgt.

3. Begrenzungsvorrichtung für optische Fasern nach Anspruch 1, dadurch gekennzeichnet, daß sie weiterhin einen Keil (20) aufweist, zum Kontaktieren der Reihe von Fasern, am weitesten von der Grundlinie (19) entfernt.

4. Begrenzungsvorrichtung für optische Fasern nach Anspruch 1 oder 2, dadurch gekennzeichnet, daß die Aufnahme (12) aus Silizium hergestellt ist.

5. Begrenzungsvorrichtung für optische Fasern nach irgendeinem der Ansprüche 1 bis 3, dadurch gekennzeichnet, daß die Fasern (11) eine Anordnung mit einem dreieckigen Querschnitt bilden, die Achse einer zentralen Faser (11') an dem Querschnitt der drei Linien liegt, die die Winkel der dreieckförmigen Anordnung halbieren, und die Aufnahme angeordnet ist, um sich um die Achse der zentralen Faser zu drehen.

6. Begrenzungsvorrichtung für optische Fasern nach Anspruch 4, dadurch gekennzeichnet, daß die Aufnahme (12) im wesentlichen zylinderförmig ist und die zentrale Faser (11') entlang der zentralen Achse der zylinderförmigen Aufnahme positioniert ist.

7. Begrenzungsvorrichtung für optische Fasern nach Anspruch 1, dadurch gekennzeichnet, daß die Vertiefung (15-19-16) angeordnet ist, um Fasern mit einem äußeren Durchmesser in dem Bereich von vierzig $\mu$m bis einhundertsiebzig $\mu$m aufzunehmen.

8. Verfahren zum Bilden einer Begrenzungsvorrichtung für optische Fasern nach Anspruch 1, gekennzeichnet durch die Schritte: Vorsehen einer Aufnahme (12), die einen ersten und einen zweiten Teil (13, 14) aufweist, die jeweils einen ersten und einen zweiten ebenen Oberflächenabschnitt (15, 16) und jeweils einen ersten und einen zweiten weiteren ebenen Oberflächenabschnitt (17, 18) haben, die zwei jeweilige äußere Winkel mit insgesamt vierhundertzwanzig Grad erzeugen, wobei zumindest einer der äußeren Winkel bei einer Schnittlinie (19) zwischen ihren zugehörigen ebenen Oberflächenabschnitten (15 und 17, 16 und 18) ist; in Kontakt bringen des weiteren ebenen Oberflächenabschnitts (17) des ersten Teils (13) mit dem weiteren ebenen Oberflächenabschnitt (18) des zweiten Teils (14), und Verbinden des ersten und des zweiten Teils (13, 14) miteinander, so daß der erste und der zweite ebene Oberflächenabschnitt (15, 16) eine "V"-Vertiefung von genau 60° der Aufnahme bildet, die eine Grundlinie (19) aufweist, die durch die Schnittlinie (19) gebildet ist; Biegen von Fasern kleinen Durchmessers und Einführen von ihnen in die Aufnahme mit einer Kraft, die im allgemeinen gegenüber der Grundlinie (19) der "V"-Vertiefung wirkt, wodurch eine dicht gepackte Anordnung von nebeneinander liegenden Fasern gebildet wird, die in die Vertiefung aufgenommen sind, und permanentes Sichern der aufgenommenen Anordnung von nebeneinander liegenden Fasern in der Aufnahme (12).

9. Verfahren zum Herstellen einer Begrenzungsvorrichtung nach Anspruch 8, gekennzeichnet durch Biegen einer ersten Faser (11) und Anwenden einer Kraft in der Richtung der Grundlinie (19) der Vertiefung, so daß die Faser entlang der Vertiefung liegt, Biegen zweier weiterer Fasern und Anwenden einer Kraft in der Richtung der Vertiefung, so daß die weiteren Fasern neben die ersten gelegt werden, und Einführen weiterer Fasern auf die gleiche Art, um eine Anordnung an optischen Fasern zu bilden, die einen dreieckförmigen Querschnitt aufweist.

10. Verfahren zum Herstellen einer Begrenzungsvorrichtung nach Anspruch 8, gekennzeichnet durch Gruppieren der Fasern in einer "V"-förmigen Führung (31), um eine dreieckförmige Anordnung zu bilden, Neigen der Führung um einen Winkel zu der Aufnahme, um die Fasern zu biegen, und Zwingen der Fasern in eine Position gegeneinander in die Aufnahme.

11. Verfahren zum Herstellen einer Begrenzungsvorrichtung nach irgendeinem der Ansprüche 8 bis 10, gekennzeichnet durch Positionieren eines Keils (20) über der Reihe von Fasern, am weitesten von der Grundlinie (19) entfernt.

# Fig .1.

EP 0 200 414 B1

Fig.2.

Fig.3.

10